# Europäisches Patentamt

## European Patent Office
## Office européen des brevets

(19)

(11) Veröffentlichungsnummer: **0 049 859**
**B1**

(12)                    **EUROPÄISCHE PATENTSCHRIFT**

(45) Veröffentlichungstag der Patentschrift:
**12.06.85**

(51) Int. Cl.⁴: **C 08 L 31/02, C 08 L 31/04,**
**C 08 L 33/08**

(21) Anmeldenummer: **81108008.4**

(22) Anmeldetag: **07.10.81**

(54) **Kunstharz-Komposition, Verfahren zu ihrer Herstellung, ihre Anwendung und aus der Komposition hergestellte Folie.**

(30) Priorität: **11.10.80 DE 3038471**

(43) Veröffentlichungstag der Anmeldung:
**21.04.82 Patentblatt 82/16**

(45) Bekanntmachung des Hinweises auf die Patenterteilung:
**12.06.85 Patentblatt 85/24**

(84) Benannte Vertragsstaaten:
**AT BE CH DE FR GB IT LI LU NL SE**

(56) Entgegenhaltungen:
**FR - A - 1 274 569**

(73) Patentinhaber: **HOECHST AKTIENGESELLSCHAFT,**
**Postfach 80 03 20, D-6230 Frankfurt am Main 80 (DE)**

(72) Erfinder: **Küchler, Manfred, Bleibiskopfstrasse 5,**
**D-6370 Oberursel/Taunus (DE)**
Erfinder: **Duve, Günther, Dr. rer.nat., Spindelstrasse 36,**
**D-6234 Hattersheim am Main (DE)**
Erfinder: **Ebigt, Joachim, Dr., Frauenlobstrasse 76a,**
**D-6000 Frankfurt am Main 90 (DE)**

### Beschreibung

Die Erfindung bezieht sich auf eine Kunstharz-Komposition, die aus mindestens zwei verschiedenen Polymeren und einem Füllstoff zusammengesetzt ist, sowie auf ein Verfahren zu ihrer Herstellung, ihre Verwendung als Ausgangsmaterial für schwingungsdämpfende Folien und eine Folie aus der Kunstharz-Komposition.

Es ist bekannt, dass sowohl Mischpolymerisate als auch Polymerisatgemische zur Herstellung schwingungsdämpfender Folien geeignet sind; insbesondere wurden Gemische aus Polystyrol und Polymethylmethacrylat, aus Polystyrol und einem Styrol/Methylacrylat-Mischpolymerisat und aus Polymethylmethacrylat und Polyvinylacetat untersucht (vgl. Kolloid-Zeitschrift, Band 148 (1956), Seiten 57 ff).

Ferner ist bekannt, dass Füllstoffe die Schalldämpfende Wirkung von Antidröhnmassen, die als Bindemittel ein Acrylestermischpolymerisat, ein Polyvinylpropionat oder ein weichmacherhaltiges Polyvinylacetat enthalten, beeinflussen; dabei werden Füllstoffe wie Vermiculit, Glimmer, Graphit, Kaolin, Chinaclay, Feldspat, Talkum, Asbest, Russ, Bariumsulfat und Perlite jeweils in einer Menge bis zu 40 Prozent eingesetzt (vgl. Kunststoffe, Band 50 (1960), Seiten 606 ff).

Ein wichtiges Kriterium für die Anwendbarkeit schwingungsdämpfender Stoffe zur Dämpfung der Biegeschwingungen von harten Platten, insbesondere von Blechen von Blechkonstruktionen von Fahrzeugen aller Art sowie in Maschinen, Geräten und Bauteilen, ist die Temperaturbandbreite der Dämpfung, die bei den meisten technischen Anwendungen der Dämpfungsstoffe für den Frequenzbereich zwischen 100 und 1000 Hertz hauptsächlich interessiert (vgl. Kolloid-Zeitschrift, Band 216–217 (1967), Seiten 64 ff).

Aus der FR-A-127 4569 sind Dispersionspolymerisate und/oder -copolymerisate, die Füllstoffe enthalten können, als Entdröhnungsmittel für Bleche bekannt. Daraus hergestellte Temperaturbreitbandmischungen besitzen z.B. aber eine relativ enge Temperaturbandbreite, die zudem oberhalb des Winterkältetemperaturbereichs liegt. Ausserdem ist der erzielbare Verlustfaktor unbefriedigend.

Aufgabe der Erfindung ist die Bereitstellung eines thermoplastischen Materials, das zur Herstellung einer Folie geeignet ist, die eine Schwingungsdämpfung in einem möglichst breiten Temperaturbereich gewährleistet.

Die Erfindung betrifft nun eine Kunstharz-Komposition, bestehend aus

a) 10 bis 90 Gewichtsprozent eines Copolymers aus mindestens einem Acrylsäurealkylester mit 4 bis 10 Kohlenstoffatomen im Alkylrest, einem Methacrylsäurealkylester mit 1, 2 oder 3 Kohlenstoffatomen im Alkylrest, einem Amid einer ungesättigten Monocarbonsäure mit 3, 4 oder 5 Kohlenstoffatomen und gegebenenfalls einer ungesättigten Monocarbonsäure mit 3, 4 oder 5 Kohlenstoffatomen,

b) 90 bis 10 Gewichtsprozent mindestens eines Polymers eines Vinylesters mit 4, 5 oder 6 Kohlenstoffatomen, oder gegebenenfalls eines Copolymerisats des Vinylesters mit einem Maleinsäuredialkylester oder Fumarsäuredialkylester mit jeweils 4 bis 18 C-Atomen in den Alkylresten,

c) 0 bis 80 Gewichtsprozent eines anorganischen Füllstoffes,

d) 0 bis 10 Gewichtsprozent Epoxidharzes mit einem mittleren Epoxid-Äquivalentgewicht von 100 bis 5000 und

e) 0 bis 10 Gewichtsprozent eines Alkoholats eines zwei-, drei- oder vierwertigen Metalls, wobei die Menge der Komponenten c), d) und e) jeweils auf die Summe der Komponenten a) + b) + c), die 100 Gewichtsteile beträgt, bezogen ist.

Die Erfindung betrifft ferner ein Verfahren zur Herstellung einer Kunstharz-Komposition, dadurch gekennzeichnet, dass

a) 10 bis 90 Gewichtsteile eines Copolymers aus mindestens einem Acrylsäurealkylester mit 4 bis 10 Kohlenstoffatomen im Alkylrest, einem Methacrylsäurealkylester mit 1, 2 oder 3 Kohlenstoffatomen im Alkylrest, einem Amid einer ungesättigten Monocarbonsäure mit 3, 4 oder 5 Kohlenstoffatomen und gegebenenfalls einer ungesättigten Monocarbonsäure mit 3, 4 oder 5 Kohlenstoffatomen mit

b) 90 bis 10 Gewichtsteilen mindestens eines Polymers eines Vinylesters mit 4, 5 oder 6 Kohlenstoffatomen, oder gegebenenfalls eines Copolymerisats des Vinylesters mit einem Maleinsäuredialkylester oder Fumarsäuredialkylester mit jeweils 4 bis 18 C-Atomen in den Alkylresten,

c) 0 bis 80 Gewichtsteilen eines anorganischen Füllstoffs,

d) 0 bis 10 Gewichtsteilen eines Epoxidharzes mit einem mittleren Epoxid-Äquivalentgewicht von 100 bis 5000 und

e) 0 bis 10 Gewichtsteilen eines Alkoholats eines zwei-, drei- oder vierwertigen Metalls, wobei die Summe der Komponenten a) + b) + c) 100 Gewichtsteile beträgt, bei einer Temperatur von 150 bis 180 °C während einer Zeitspanne von 10 bis 30 Minuten in einem Kneter intensiv miteinander vermischt werden und das Gemisch dann in Form von Teilchen mit einem durchschnittlichen Partikeldurchmesser von 1 bis 10 mm ausgetragen wird.

Weiterhin betrifft die Erfindung die Verwendung der vorgenannten Kunstharz-Komposition als Ausgangsmaterial zur Herstellung von schwingungsdämpfenden Folien sowie die aus der Kunstharz-Komposition hergestellte Folie.

Die erfindungsgemässe Kunstharz-Komposition setzt sich vorzugsweise zusammen aus 20 bis 80 Gewichtsprozent der Komponente a), 80 bis 20 Gewichtsprozent der Komponente b), 60 bis 80 Gewichtsprozent der Komponente c) 0 bis 6 Gewichtsprozent der Komponente d) und 0 bis 6 Gewichtsprozent der Komponente e), wobei die Menge der Komponenten c), d) und e) jeweils auf die Summe der Komponenten a) + b) + c), die 100 Gewichtsteile beträgt, bezogen ist.

Hauptbestandteil der erfindungsgemässen Kunstharz-Komposition ist ein Gemisch von mindestens zwei nach Art und Eigenschaften verschiedenen Polymeren. Während als Komponente a) ein Copolymer aus mindestens drei Monomeren eingesetzt wird, das eine Einfriertemperatur von höchstens −10 °C aufweist, dient als Komponente b) ein Vinylesterpolymer mit einer Einfriertemperatur von mindestens +5 °C. Besonders vorteilhaft ist ein Gemisch der Komponenten a) und b), deren Einfriertemperaturen sich um mindestens 20 °C unterscheiden. Vorzugsweise liegt die Einfriertemperatur der Komponente a) im Bereich von −50 bis −10 °C, und die Einfriertemperatur der Komponente b) beträgt 5 bis 50 °C, vorzugsweise 10 bis 35 °C.

Die Komponente a) ist ein Copolymer aus mindestens einem Acrylsäurealkylester, vorzugsweise zwei oder drei Acrylsäurealkylestern, mit jeweils 4 bis 10 Kohlenstoffatomen, vorzugsweise 4 bis 8 Kohlenstoffatomen, im Alkylrest, sowie einem Methacrylsäurealkylester mit 1, 2 oder 3 Kohlenstoffatomen im Alkylrest, einem Amid einer ungesättigten Monocarbonsäure mit 3, 4 oder 5 Kohlenstoffatomen und gegebenenfalls einer ungesättigten Monocarbonsäure mit 3, 4 oder 5 Kohlenstoffatomen. Das Copolymer wird hergestellt durch Polymerisation eines Gemisches aus 70 bis 85 Gewichtsprozent, vorzugsweise 75 bis 82 Gewichtsprozent, des oder der Acrylsäurealkylester(s), 5 bis 20 Gewichtsprozent, vorzugsweise 8 bis 17 Gewichtsprozent, des Methacrylsäurealkylesters, 3 bis 10 Gewichtsprozent, vorzugsweise 4 bis 8 Gewichtsprozent, des Amids und 0 bis 5 Gewichtsprozent, vorzugsweise 0,4 bis 3 Gewichtsprozent, der Monocarbonsäure unter üblichen Bedingungen. Die Viskosität des Copolymers liegt im Bereich 20 bis 80 Pa·s, vorzugsweise von 35 bis 50 Pa·s (gemessen in der Schmelze bei einer Temperatur von 180 °C).

Als Acrylsäurealkylester werden Acrylsäureester mit linearem oder verzweigtem Alkylrest verwendet, beispielsweise Acrylsäurebutylester, Acrylsäurepentylester, Acrylsäurehexylester, Acrylsäureoctylester, Acrylsäure-t-butylester, Acrylsäureamylester, Acrylsäure-t-amylester, Acrylsäure-2,2-dimethylbutylester, Acrylsäure-3,3-dimethylbutylester und Acrylsäure-4-ethylhexylester. Geeignete Methacrylsäurealkylester sind Methacrylsäure-methylester, -ethylester und -propylester, und als Amide eignen sich insbesondere Acrylsäureamid, Methacrylsäureamid, Crotonsäureamid und Vinylessigsäureamid. Als Monocarbonsäure wird insbesondere Acrylsäure, Methacrylsäure, Crotonsäure oder Vinylessigsäure eingesetzt.

Die Komponente b) ist ein Polymer eines Vinylesters mit 4, 5 oder 6 Kohlenstoffatomen, das durch Polymerisation von Vinylacetat, Vinylpropionat oder Vinylbutyrat, gegebenenfalls in Kombination mit einem Maleinsäuredialkylester oder Fumarsäuredialkylester mit jeweils 4 bis 18 Kohlenstoffatomen, vorzugsweise 4 bis 10 Kohlenstoffatomen, in den Alkylresten unter üblichen Bedingungen hergestellt wird. Polyvinylacetat ist besonders gut geeignet. Die Viskosität der 20 gewichtsprozentigen Lösung des Vinylester-Homopolymers in Essigsäureethylester liegt im Bereich von 4 bis 250 mPa·s, vorzugsweise von 30 bis 150 mPa·s (gemessen im Höppler-Viskosimeter bei einer Temperatur von 20 °C nach DIN 53015); seine Säurezahl beträgt zweckmässigerweise 0,2 bis 2,5 mg KOH/g, vorzugsweise 0,2 bis 1,0 mg KOH/g (gemessen nach DIN 53402). Die Viskosität der 20 gewichtsprozentigen Lösung des Vinylester-Copolymers in Essigsäureethylester liegt im Bereich von 3 bis 30 mPa·s, vorzugsweise 5 bis 20 mPa·s (gemessen wie oben angegeben). Die Komponente b) kann auch ein Gemisch verschiedener Polymere sein.

Die Komponente c) ist ein anorganischer Füllstoff, vorzugsweise ein Carbonat oder Oxid oder inertes Mineral. Geeignete Füllstoffe sind beispielsweise Graphit, Schiefermehl, Kreide, Glimmer und Vermiculite. Besonders vorteilhaft ist ein Füllstoff, der ein Gemisch verschiedener Materialien darstellt, vorzugsweise ein Gemisch aus Kreide und einem weiteren Füllstoff; das Gewichtsverhältnis beträgt dabei 2:1 bis 1:2.

Die Komponente d) ist ein Epoxidharz mit einem mittleren Epoxid-Äquivalentgewicht von 100 bis 5000 g, vorzugsweise von 100 bis 500 g (Harzmenge, die 1 Mol Epoxidgruppen enthält). Die Viskosität des Epoxidharzes liegt im Bereich von 0,1 bis 35 Pa·s, vorzugsweise von 0,5 bis 15 Pa·s (gemessen bei einer Temperatur von 25 °C im Höppler-Viskosimeter nach DIN 53015). Geeignete Epoxidharze sind beispielsweise die bekannten Glycidylether von Bisphenolen, d.h. Reaktionsprodukte von Bisphenolen, z.B. Bis(4-hydroxyphenyl)-methan oder 2,2-Bis(4-hydroxyphenyl)-propan, mit Epichlorhydrin. Diese Epoxidharze zeigen je nach dem Molverhältnis der beteiligten Komponenten eine flüssige, pastöse oder feste Konsistenz.

Die Komponente e) ist ein Alkoholat eines zweiwertigen, dreiwertigen oder vierwertigen Metalls, dessen Alkoholkomponente vorzugsweise ein einwertiges oder zweiwertiges Alkanol mit 1 bis 6 Kohlenstoffatomen, insbesondere 2 bis 4 Kohlenstoffatomen, ist. Besonders geeignet sind Alkoholate des Magnesiums, Calciums und vorzugsweise des Aluminiums mit Ethanol, Propanol, Butanol, Ethylenglykol, Propandiol-(1,3) und Butandiol-(1,4).

Die erfindungsgemässe Kunstharz-Komposition wird hergestellt durch gleichmässiges und intensives Vermischen der jeweils beteiligten Komponenten bei einer Temperatur von 150 bis 180 °C, vorzugsweise 160 bis 170 °C. Zum Herstellen des Gemisches genügt ein Zeitraum von 10 bis 30 Minuten, vorzugsweise von 15 bis 25 Minuten. Als Mischgerät wird ein Gerät bevorzugt, das ein homogenes Durchmischen der einzelnen Gemischbestandteile gewährleistet; besonders geeignet ist hierfür ein Kneter. Zweckmässigerweise wird das Gemisch aus dem Mischgerät in Form von Teilchen mit einem durchschnittlichen Partikeldurchmesser von 1 bis 10 mm, vorzugsweise von 2 bis 5 mm, ausgetragen. Eine Granulatform ist hierbei bevorzugt.

Folien werden aus der erfindungsgemässen Kunstharz-Dispersion hergestellt durch Kalandrieren oder Extrudieren mit einer Breitschlitzdüse. Bei Verwendung der Folien als sogenannte Leichtdämmfolien beträgt ihre Stärke im allgemeinen 1 bis 5 mm, vorzugsweise 1,5 bis 4 mm. Die Folien sind besonders dadurch ausgezeichnet, dass sie bei Frequenzen von 100 bis 1000 Hertz im Temperaturbereich von höchstens −20 °C bis mindestens +40 °C schwingungsdämpfend wirken.

Das Dämpfungsverhalten der erfindungsgemässen Folien wird durch die Ermittlung des Verlustfaktors im Biegeschwingungsversuch nach DIN 53 440 geprüft. Der dabei verwendete Probekörper besteht aus einem Stahlblech und der zu prüfenden Folie, die mit dem Stahlblech verbunden ist, vorzugsweise durch Verkleben. Die Folie hat eine Dicke von 1,5 bis 2,5 mm, während das Stahlblech 1,0 mm dick ist; dabei beträgt der Belagsfaktor, d.h. der mit 100 multiplizierte Quotient aus der Folienmasse und der Blechmasse, 40 bis 60 Prozent, vorzugsweise höchstens 50 Prozent. Die Messung wird jeweils bei einer Frequenz von 100 Hertz und von 1000 Hertz durchgeführt. Das Dämpfungsverhalten ist als gut zu bewerten, wenn die Temperaturbandbreite sich bei einem Verlustfaktor von mindestens 0,05 über einen Bereich von mindestens 60 °C erstreckt, wobei die Temperaturuntergrenze höchstens −20 °C beträgt.

Die nachstehenden Beispiele dienen zur näheren Erläuterung der Erfindung. Prozentangaben und Verhältnisangaben beziehen sich jeweils auf das Gewicht.

Beispiel 1

In einem handelsüblichen, heizbaren Kneter mit einem Fassungsvermögen von 0,5 l werden bei einer Innentemperatur von 170 °C (a) 80 g eines Copolymers aus 62% Acrylsäure-2-ethylhexylester, 23% Acrylsäurebutylester, 8% Methacrylsäuremethylester, 6% Acrylsäureamid und 1% Acrylsäure, das eine Einfriertemperatur von −47 °C und eine Schmelzviskosität (bei 180 °C) von 25 Pa·s aufweist, mit (b) 40 g Polyvinylacetat, dessen 20 prozentige Lösung in Essigsäureethylester eine Viskosität von 130 mPa·s zeigt und das eine Säurezahl von 0,6 mg KOH/g aufweist, während eines Zeitraums von 30 min homogen verknetet. Zu diesem Gemisch werden unter dauerndem Kneten innerhalb von 10 min (c) 223 g eines Schiefermehl/Kreide-Gemisches (1:1) gegeben, und die erhaltene Kunstharz-Komposition wird noch 30 min lang nachgeknetet.

Das Dämpfungsverhalten einer Folie aus der vorgenannten Kunstharz-Komposition wird im Biegeschwingungsversuch nach DIN 53440 untersucht. Die dazu benötigte Folie wird durch Pressen der Kunstharz-Komposition bei einer Temperatur von 160 °C zwischen zwei Trennfolien in einer Heizpresse hergestellt; sie hat eine Stärke von 2,5 mm. Der Probekörper besteht aus einem Stahlblech mit einer Dicke von 1 mm, das durch Verkleben mit der vorgenannten Folie verbunden ist. Die Prüfung ergibt bei einem Belagfaktor von 56,9% einen Verlustfaktor von mindestens 0,05 über eine Temperaturbandbreite von −30 °C bis 40 °C bei einer Frequenz von 100 Hz und von −30 °C bis 50 °C bei einer Frequenz von 1000 Hz.

Beispiel 2

Beispiel 1 wird wiederholt mit der Massgabe, dass die Komponente (a) in einer Menge von 60 g und die Komponente (b) in einer Menge von 60 g eingesetzt wird.

Die Prüfung ergibt bei einem Belagfaktor von 56,9% einen Verlustfaktor von mindestens 0,05 über eine Temperaturbandbreite von −35 °C bis 65 °C bei einer Frequenz von 100 Hz und von −25 °C bis 65 °C bei einer Frequenz von 1000 Hz.

Beispiel 3

Beispiel 1 wird wiederholt mit der Massgabe, dass die Komponente (a) in einer Menge von 48 g und die Komponente (b) in einer Menge von 72 g eingesetzt wird.

Die Prüfung ergibt bei einem Belagfaktor von 53,8% einen Verlustfaktor von mindestens 0,05 über eine Temperaturbandbreite von −25 °C bis 70 °C bei einer Frequenz von 100 Hz und von −20 °C bis 75 °C bei einer Frequenz von 1000 Hz.

Beispiel 4

Beispiel 1 wird wiederholt mit der Massgabe, dass die Komponente (a) und die Komponente (b) jeweils in einer Menge von 60 g und die Komponente (c) in einer Menge von 120 g verwendet wird.

Die Prüfung ergibt bei einem Belagfaktor von 46,2% einen Verlustfaktor von mindestens 0,05 über eine Temperaturbandbreite von −25 °C bis 40 °C bei einer Frequenz von 100 Hz und von −25 °C bis 45 °C bei einer Frequenz von 1000 Hz.

Beispiel 5

Beispiel 1 wird wiederholt mit der Massgabe, dass die Komponente (a) und die Komponente (b) jeweils in einer Menge von 60 g und die Komponente (c) in einer Menge von 180 g eingesetzt wird.

Die Prüfung ergibt bei einem Belagfaktor von 54,8% einen Verlustfaktor von mindestens 0,05 über eine Temperaturbandbreite von −25 °C bis 50 °C bei einer Frequenz von 100 Hz und von −25 °C bis 60 °C bei einer Frequenz von 1000 Hz.

Beispiel 6

Beispiel 1 wird wiederholt mit der Massgabe, dass die Komponente (a) und die Komponente (b) jeweils in einer Menge von 60 g und die Komponente (c) in einer Menge von 280 g eingesetzt wird.

Die Prüfung ergibt bei einem Belagfaktor von 58,4% einen Verlustfaktor von mindestens 0,05 über eine Temperaturbandbreite von −25 °C bis 75 °C bei einer Frequenz von 100 Hz und von −25 °C bis 75 °C bei einer Frequenz von 1000 Hz.

**Beispiel 7**

Beispiel 1 wird wiederholt mit der Massgabe, dass die Komponente (a) in einer Menge von 40 g, die Komponente (b) in einer Menge von 80 g und die Komponente (c) in einer Menge von 280 g eingesetzt wird; dabei besteht die Komponente (b) aus einem 1:1-Gemisch aus Polyvinylacetat, dessen 20 prozentige Lösung in Essigsäureethylester eine Viskosität von 130 mPa·s zeigt und das eine Säurezahl von 0,6 mg KOH/g aufweist, und einem Copolymer aus 70% Vinylacetat und 30% Maleinsäure-di-n-butylester dessen 20 prozentige Lösung in Essigsäuremethylester eine Viskosität von 5 bis 20 mPa·s zeigt.

Die Prüfung ergibt bei einem Belagfaktor von 55,5% einen Verlustfaktor von mindestens 0,05 über eine Temperaturbandbreite von −25 °C bis 65 °C bei einer Frequenz von 100 Hz und von −20 °C bis 75 °C bei einer Frequenz von 1000 Hz.

**Beispiel 8**

Beispiel 1 wird wiederholt mit der Massgabe, dass die Komponente (a) und die Komponente (b) jeweils in einer Menge von 60 g und die Komponente (c) in einer Menge von 360 g verwendet wird. Ferner wird die Komponente (c) im Gemisch mit (d) 1,2 g eines flüssigen Epoxidharzes eingesetzt, das ein mittleres Epoxid-Äquivalentgewicht von 180 bis 192 g und eine Viskosität von 9 bis 12 Pa·s aufweist. Die Prüfung ergibt bei einem Belagfaktor von 46,9% einen Verlustfaktor von mindestens 0,05 über eine Temperaturbandbreite von −25 °C bis 65 °C bei einer Frequenz von 100 Hz und von −25 °C bis 70 °C bei einer Frequenz von 1000 Hz.

**Beispiel 9**

Beispiel 1 wird wiederholt mit der Massgabe, dass die Komponente (a) und die Komponente (b) jeweils in einer Menge von 60 g und die Komponente (c) in einer Menge von 360 g verwendet wird. Ferner wird die Komponente (c) im Gemisch mit (e) 0,3 g Aluminiumbutandiolat eingesetzt.

Die Prüfung ergibt bei einem Belagfaktor von 46,9% einen Verlustfaktor von mindestens 0,05 über eine Temperaturbandbreite von −25 °C bis 75 °C bei einer Frequenz von 100 Hz und von −20 °C bis 70 °C bei einer Frequenz von 1000 Hz.

**Patentansprüche**

1. Kunstharz-Komposition, bestehend aus

a) 10 bis 90 Gewichtsprozent eines Copolymers aus mindestens einem Acrylsäurealkylester mit 4 bis 10 Kohlenstoffatomen im Alkylrest, einem Methacrylsäurealkylester mit 1,2 oder 3 Kohlenstoffatomen im Alkylrest, einem Amid einer ungesättigten Monocarbonsäure mit 3, 4 oder 5 Kohlenstoffatomen und gegebenenfalls einer ungesättigten Monocarbonsäure mit 3, 4 oder 5 Kohlenstoffatomen,

b) 90 bis 10 Gewichtsprozent mindestens eines Polymers eines Vinylesters mit 4, 5 oder 6 Kohlenstoffatomen, oder gegebenenfalls eines Copolymerisats des Vinylesters mit einem Maleinsäuredialkylester oder Fumarsäuredialkylester mit jeweils 4 bis 18 C-Atomen in den Alkylresten,

c) 0 bis 80 Gewichtsprozent eines anorganischen Füllstoffes,

d) 0 bis 10 Gewichtsprozent eines Epoxidharzes mit einem mittleren Epoxid-Äquivalentgewicht von 100 bis 5000 und

e) 0 bis 10 Gewichtsprozent eines Alkoholats eines zwei-, drei- oder vierwertigen Metalls, wobei die Menge der Komponenten c), d) und e) jeweils auf die Summe der Komponenten a)+b)+c), die 100 Gewichtsteile beträgt, bezogen ist.

2. Kunstharz-Komposition nach Anspruch 1, dadurch gekennzeichnet, dass das Copolymer a) durch Polymerisation eines Gemisches aus 70 bis 85 Gewichtsprozent mindestens eines Acrylsäurealkylesters, 5 bis 20 Gewichtsprozent eines Methacrylsäureesters, 3 bis 10 Gewichtsprozent eines Amids einer ungesättigten Monocarbonsäure und 0 bis 5 Gewichtsprozent einer ungesättigten Monocarbonsäure hergestellt worden ist.

3. Kunstharz-Komposition nach Anspruch 1, dadurch gekennzeichnet, dass das Copolymer a) eine Einfriertemperatur von −50 bis −10 °C aufweist.

4. Kunstharz-Komposition nach Anspruch 1, dadurch gekennzeichnet, dass das Polymer b) eine Einfriertemperatur von 5 bis 50 °C aufweist.

5. Kunstharz-Komposition nach Anspruch 1, dadurch gekennzeichnet, dass der Füllstoff c) ein Carbonat oder Oxid oder inertes Mineral oder ein Gemisch dieser Stoffe ist.

6. Verfahren zur Herstellung einer Kunstharz-Komposition, dadurch gekennzeichnet, dass

a) 10 bis 90 Gewichtsteile eines Copolymers aus mindestens einem Acrylsäurealkylester mit 4 bis 10 Kohlenstoffatomen im Alkylrest, einem Methacrylsäurealkylester mit 1, 2 oder 3 Kohlenstoffatomen im Alkylrest, einem Amid einer ungesättigten Monocarbonsäure mit 3, 4 oder 5 Kohlenstoffatomen und gegebenenfalls einer ungesättigten Monocarbonsäure mit 3, 4 oder 5 Kohlenstoffatomen mit

b) 90 bis 10 Gewichtsteilen mindestens eines Polymers eines Vinylesters mit 4, 5 oder 6 Kohlenstoffatomen, oder gegebenenfalls eines Copolymerisats des Vinylesters mit einem Maleinsäuredialkylester oder Fumarsäuredialkylester mit jeweils 4 bis 18 C-Atomen in den Alkylresten,

c) 0 bis 80 Gewichtsteilen eines anorganischen Füllstoffes,

d) 0 bis 10 Gewichtsteilen eines Epoxidharzes mit einem mittleren Epoxid-Äquivalentgewicht von 100 bis 5000 und

e) 0 bis 10 Gewichtsteilen eines Alkoholats eines zwei-, drei- oder vierwertigen Metalls, wobei die Summe der Komponenten a)+b)+c) 100 Gewichtsteile beträgt, bei einer Temperatur von 150 bis 180 °C während einer Zeitspanne von 10 bis 30 Minuten in einem Kneter intensiv miteinander vermischt werden und das Gemisch dann in Form von Teilchen mit einem durchschnittlichen Partikeldurchmesser von 1 bis 10 mm ausgetragen wird.

7. Verfahren zur Herstellung einer schwingungsdämpfenden Folie, dadurch gekennzeichnet, dass eine Kunstharz-Komposition gemäss Anspruch 1 kalandriert oder durch eine Breitschlitzdüse extrudiert wird.

8. Schwingungsdämpfende Folie, hergestellt aus der Kunstharz-Komposition gemäss Anspruch 1.

## Revendications

1. Composition de résine synthétique, comprenant

(a) 10 à 90% en poids d'un copolymère d'au moins un acrylate d'alkyle à 4 à 10 atomes de carbone dans le groupe alkyle, d'un méthacrylate d'alkyle à 1, 2 ou 3 atomes de carbone dans le groupe alkyle, d'un amide d'un acide monocarboxylique insaturé à 3, 4 ou 5 atomes de carbone et éventuellement d'un acide monocarboxylique insaturé à 3, 4 ou 5 atomes de carbone,

b) 90 à 10% en poids d'au moins un polymère d'un ester vinylique à 4, 5 ou 6 atomes de carbone, ou éventuellement d'un copolymère de l'ester vinylique et d'un maléate de dialkyle ou d'un fumarate de dialkyle, ayant chacun 4 à 18 atomes de carbone dans le groupe alkyle,

c) 0 à 80% en poids d'une charge inorganique,

d) 0 à 10% en poids d'une résine époxyde ayant une masse équivalente moyenne d'époxyde de 100 à 5000 et

e) 0 à 10% en poids d'un alcoolate d'un métal bivalent, trivalent ou tétravalent,

la concentration des constituants c), d) et e) se rapportant dans chaque cas à la somme des constituants a) + b) + c), laquelle est de 100 parties en poids.

2. Composition de résine synthétique selon la revendication 1, caractérisée en ce que le copolymère a) a été préparé par polymérisation d'un mélange de 70 à 85% en poids d'au moins un acrylate d'alkyle, de 5 à 20% en poids d'un méthacrylate, de 3 à 10% en poids d'un amide d'un acide monocarboxylique insaturé et de 0 à 5% en poids d'un acide monocarboxylique insaturé.

3. Composition de résine synthétique selon la revendication 1, caractérisée en ce que le copolymère a) présente une température de transition du second ordre de − 50 à − 10 °C.

4. Composition de résine synthétique selon la revendication 1, caractérisée en ce que le polymère b) présente une température de transition du second ordre de 5 à 50 °C.

5. Composition de résine synthétique selon la revendication 1, caractérisée en ce que la charge c) est un carbonate ou un oxyde ou une matière minérale inerte ou un mélange de ces matières.

6. Procédé de préparation d'une composition de résine synthétique, caractérisé en ce qu'on mélange d'une manière intense les uns aux autres, dans un malaxeur, à une température de 150 à 180 °C pendant un temps de 10 à 30 minutes,

a) 10 à 90 parties en poids d'un copolymère d'au moins un acrylate d'alkyle à 4 à 10 atomes de carbone dans le groupe alkyle, d'un méthacrylate d'alkyle à 1, 2 ou 3 atomes de carbone dans le groupe alkyle, d'un amide d'un acide monocarboxylique insaturé à 3, 4 ou 5 atomes de carbone et éventuellement d'un acide monocarboxylique insaturé à 3, 4 ou 5 atomes de carbone, à

b) 90 à 10 parties en poids d'au moins un polymère d'un ester vinylique à 4, 5 ou 6 atomes de carbone, ou éventuellement d'un copolymère de l'ester vinylique et d'un maléate de dialkyle ou d'un fumarate de dialkyle ayant chacun 4 à 18 atomes de carbone dans le groupe alkyle,

c) 0 à 80 parties en poids d'une charge inorganique,

d) 0 à 10 parties en poids d'une résine époxyde ayant une masse équivalente moyenne d'époxyde de 100 à 5000, et

e) 0 à 10 parties en poids d'un alcoolate d'un métal bivalent, trivalent ou tétravalent,

la somme des constituants a) + b) + c) étant de 100 parties en poids, le mélange étant ensuite extrait sous la forme de particules ayant un diamètre moyen de 1 à 10 mm.

7. Procédé de préparation d'une feuille amortissant les vibrations, caractérisé en ce qu'une composition de résine synthétique selon la revendication 1 est calandrée, ou extrudée par une filière plate.

8. Feuille amortissant les vibrations, préparée à partir de la composition de résine synthétique selon la revendication 1.

## Claims

1. A synthetic resin composition which comprises

a) 10 to 90 per cent by weight of a copolymer composed of at least one acrylic acid alkyl ester having 4 to 10 carbon atoms in the alkyl radical, a methacrylic acid alkyl ester having 1, 2 or 3 carbon atoms in the alkyl radical, an amide of an unsaturated monocarboxylic acid having 3, 4 or 5 carbon atoms, and if appropriate, an unsaturated monocarboxylic acid having 3, 4 or 5 carbon atoms,

b) 90 to 10 per cent by weight of at least one polymer of a vinyl ester having, 4, 5 or 6 carbon atoms, or if appropriate, of a copolymer of the vinyl ester and a maleic acid dialkyl ester or a fumaric acid dialkyl ester, each of which has 4 to 18 carbon atoms in the alkyl radicals,

c) 0 to 80 per cent by weight of an inorganic filler

d) 0 to 10 per cent by weight of an epoxide resin having an average epoxide equivalent weight of 100 to 5,000 and

e) 0 to 10 per cent by weight of an alcoholate of a bivalent, trivalent or tetravalent metal, the quantity of the components c) d) and e) being in each case related to the total of the components a) + b) + c) amounting to 100 parts by weight.

2. A synthetic resin composition as claimed in Claim 1 wherein the copolymer a) has been prepared by polymerising a mixture composed of 70 to 85 per cent by weight of at least one acrylic acid alkyl ester, 5 to 20 per cent by weight of a methacrylic acid ester, 3 to 10 per cent by weight of an amide of an unsaturated monocarboxylic acid and 0 to 5 per cent by weight of an unsaturated monocarboxylic acid.

3. A synthetic resin composition as claimed in Claim 1, wherein the copolymer a) has a second order transition temperature of −50 to −10 °C.

4. A synthetic resin composition as claimed in Claim 1, wherein the polymer b) has a second order transition temperature of 5 to 50 °C.

5. A synthetic resin compositon as claimed in Claim 1, wherein the filler c) is a carbonate or an oxide or an inert mineral, or a mixture of these substances.

6. A process for the preparation of a synthetic resin composition, which comprises thoroughly mixing together, at a temperature of 150 to 180 °C for a period of 10 to 30 minutes in a kneader,

a) 10 to 90 parts by weight of a copolymer composed of at least one acrylic acid alkyl ester having 4 to 10 carbon atoms in the alkyl radical, a methacrylic acid alkyl ester having 1, 2 or 3 carbon atoms in the alkyl radical, an amide of a unsaturated monocarboxylic acid having 3, 4 or 5 carbon atoms, and, if appropriate, an unsaturated monocarboxylic acid having 3, 4 or 5 carbon atoms, with

b) 90 to 10 parts by weight of at least one polymer of a vinyl ester having 4, 5 or 6 carbon atoms, or, if appropriate, of a copolymer of the vinyl ester and a maleic acid dialkyl ester or a fumaric acid dialkyl ester, each of which has 4 to 18 carbon atoms in the alkyl radicals,

c) 0 to 80 parts by weight of an inorganic filler,

d) 0 to 10 parts by weight of an epoxide resin having an average epoxide equivalent weight of 100 to 5,000 and

e) 0 to 10 parts by weight of an alcoholate of a bivalent, trivalent or tetravalent metal,

the total of the components a) + b) + c) amounting to 100 parts by weight, and then discharging the mixture in the form of particles having an average particle diameter of 1 to 10 mm.

7. A process for the production of a vibration-damping sheet, which comprises calendering a synthetic resin composition as claimed in Claim 1 or extruding this composition through a flat-film die.

8. Vibration-damping sheet produced from the synthetic resin composition as claimed in Claim 1.